Europäisches Patentamt

European Patent Office

Office européen des brevets

(11) Veröffentlichungsnummer: **0 399 019 B1**

(12) **EUROPÄISCHE PATENTSCHRIFT**

(45) Veröffentlichungstag der Patentschrift: **02.03.94**

(21) Anmeldenummer: **90900002.8**

(22) Anmeldetag: **05.12.89**

(86) Internationale Anmeldenummer:
**PCT/AT89/00116**

(87) Internationale Veröffentlichungsnummer:
**WO 90/06338 (14.06.90 90/14)**

(51) Int. Cl.5: **C08J 5/24**, C08K 3/34,
C08L 61/06, C04B 24/30

(54) **PHENOLHARZPREFORMSTOFFE UND VERFAHREN ZU IHRER HERSTELLUNG.**

(30) Priorität: **06.12.88 AT 2988/88**

(43) Veröffentlichungstag der Anmeldung:
**28.11.90 Patentblatt 90/48**

(45) Bekanntmachung des Hinweises auf die
Patenterteilung:
**02.03.94 Patentblatt 94/09**

(84) Benannte Vertragsstaaten:
**AT BE CH DE ES FR GB IT LI LU NL SE**

(56) Entgegenhaltungen:
**US-A- 3 502 610**
**US-A- 4 003 873**
**US-A- 4 417 925**

(73) Patentinhaber: **REICHHOLD CHEMIE GES.
M.B.H.**
**Breitenleer Strasse 97-99**
**A-1222 Wien(AT)**

(72) Erfinder: **FUCIK, Ivan, Thomas**
**Muhrhoferweg 13/15/17**
**A-1110 Wien(AT)**

(74) Vertreter: **Pfeifer, Otto, Dipl.-Ing. et al
Patentanwälte Schütz und Partner
Fleischmanngasse 9
A-1040 Wien (AT)**

Rank Xerox (UK) Business Services
(3.10/3.09/3.3.3)

**Beschreibung**

Die Erfindung betrifft Compounds aus einer Prematrix eines Phenolharzes und aus einem Verstärkungsmaterial mit kontrolliertem B-Zustand, die durch Wärmeeinwirkung und vorteilhafterweise unter Druck aushärten, sowie ein Verfahren zu ihrer Herstellung.

Gegenstand dieser Erfindung sind insbesondere Compounds aus einer Prematrix eines Phenolharzes und aus einem Verstärkungsmaterial, gegebenenfalls mit Härter, Katalysator, Zusatz- und Hilfsstoffen, welche sich dadurch auszeichnen, daß die Prematrix hydraulische Bindemittel und/oder deren Bestandteile sowie einen Reduktor der Alkalität bestehend aus Säuren und/oder sauren Salzen enthält, wobei Zitronensäure ausgeschlossen ist Diese Compounds, welche aus Gründen der Zweckmäßigkeit nachfolgend als "Preformstoffe" bezeichnet werden, weisen eine langzeitig einstellbare B-Zustandscharakteristik auf.

Duroplastpreformstoffe sind seit längerem bekannt. Sie sind Formstoffvorstufen im B-Zustand, die mehr oder minder lagerfähige Formmassen aus eingedickten reaktiven Gemischen der Formstoffausgangskomponenten darstellen. Sie besitzen in der Regel wenige flüchtige Anteile und können direkt zu Fertigteilen verarbeitet, beispielsweise verpreßt werden. Hergestellt werden sie als Compounds aus Prematrix und Verstärkungsmaterial. Die Prematrix setzt sich vorallem aus Reaktions- oder Kondensationsharz und Reaktionsmitteln, beispielsweise Härter, Katalysator, Eindickmittel, gegebenfalls im Gemisch mit Zusatzstoffen, wie Füllstoffen, Pigmenten, Flexibilisatoren und Hilfsstoffen, z.B. internen Trennmitteln, Gleitmitteln, Netzmitteln, zusammen. Das Verstärkungsmaterial besteht üblicherweise aus faserigen Gebilden, beispielsweise geschnitten Glasfasern. Die Eindickung bzw. Reifung, respektive das Erreichen des entsprechenden B-Zustandes erfolgt relative schnell und wird meist thermisch durchgeführt. Das entstandene Material ist pseudostabil und seine Einsetzbarkeit ist begrenzt. Die Lagerung solcher Produkte ist mit einem weiteren, jedoch langsameren Fortschreiten der Eindickung verbunden. Die Preformstoffe werden trockener und härter. Eine längere Lagerung bei Raumtemperatur kann bespielsweise bis zu weitgehender Aushärtung führen.EMC-Amorphpreformstoffe,Prepregs-Gewebepreformstoffe und SMC-Matten-Preformstoffe mögen als Beispiel dienen.

Der B-Zustand solcher Preformstoffe stellt ein Stadium dar, in dem die Prematrix des Preformstoffes, vorzugsweise auf Grund einer definiert vergrößerten Molekularmasse ihres Reaktions- bzw. Kondensationsharzanteils, eine gezielt gehemmte Rheologie aufweist und gegebenenfalls eine Autohäsion besitzt.

Die Reaktions- bzw. Kondensationsharze sind in diesem Stadium nicht mehr flüssig. Sie sind jedoch löslich und schmelzbar. Die Prematrix kann weitgehend fest sein. Üblicherweise wird sie jedoch kitt- bis etwa wachsartig und der Preformstoff weist knetbare bis wachstuchähnliche Konsistenz auf. Beim Heißverpressen verhalten sich solche B-Zustandstoffe derart, daß ihre Prematrix unter Wärme- und Druckeinwirkung fließt, das Verstärkungsmaterial reimprägniert und transportiert, allfällige Gasanteile befördert, den relevanten Werkzeugraum ausfüllt und schließlich beim Erreichen der entsprechenden Temperatur geliert und zu einem gestaltgebenden Teil des Formstückes aushärtet. Das Gelieren, der Sollendpunkt der Transportphänomene der Preßmasse im Werkzeug, ist durch Bildung von Netzstellen charakterisiert, die beim Aushärten in weitgehend volle Vernetzung übergehen.

Der B-Zustand stellt also eine materialzustandscharakteristische Größe dar, deren Eindickrate, Niveau und Stabilität von wesentlicher Bedeutung Sowohl für die Herstellung und Verarbeitbarkeit der Preformstoffe als auch für die Qualität der Folgefertigteile sind. Der B-Zustand bestimmt die Handhabung des Preformstoffes (wichtig bei anspruchsvoller Werkzeuggeometrie), beeinflußt die Dichte des einschlägigen Preßpaketes (für intra- und interlaminare Festigkeiten bedeutend) und ist auch entscheidend für die Möglichkeiten der Herstellung von Preßpaketen auf Vorrat (signifikant bei Serienproduktion).

Der B-Zustand ist relevant für die Lagerstabilität des Preformstoffes und bedeutsam für seine Fließeigenschaften bei der Verpressung.

Er beeinflußt gewichtig den Druckprofilaufbau über die Preformstoffmasse beim Preßvorgang und nimmt auch substantiellen Einfluß auf die Verteilung des Verstärkungsmaterials im Preßling.

Auch das für die Aushärtung wichtige Reaktionsverhalten der Preformstoffe und somit auch die physikalischen Eigenschaften der Folgeverbunde werden durch den Reifezustand und seine Qualität eindeutig beeinflußt.

Die Problematik der Preformstoffe liegt somit insbesondere darin, daß

- die Reaktions- bzw. Kondensationsharzsysteme für die Herstellung der Verbundvorstufen eine relativ niedrige Viskosität aufweisen müssen (sie müssen eine gute Imprägnierrheologie der einschlägigen Prematrix erlauben, um das meist faserige und des öfteren bündelförmige Verstärkungsmaterial gut durchimprägnieren zu können),
- aber trotzdem zu Prematrix-Systemen führen müssen, die schnell und wählbar eindicken,

- die erreichte Eindickstufe weitgehend stabil sein soll, sodaß der B-Zustand eine definierte Langzeitcharakteristik aufweist, und
- die Aushärtung technologisch günstig erfolgen soll.

Während das anfängliche Eindicken und Aushärten der Preformstoffe relativ beherrscht wird und auf mehrere Arten erfolgen kann, gelingt die Herstellung solcher Preformstoffe mit definiertem, weitgehend stabilem Niveau des B-zustandes oft ungenügend oder nur näherungsweise.

Die Preformstoffe müssen daher in der Praxis meist schnell verarbeitet oder bei verhältnismäßig niedrigen Temperaturen aufbewahrt werden.

Eine zufriedenstellende lösung des Problems der B-Zustandsstabilität der Preformstoffe, basierend auf Phenolharzen, ist bis jetzt trotz zahlreicher Bemühungen weitgehend offen geblieben.

Beispielsweise werden in US-A-3 502 610 Formmassen auf Phenolformaldehydharzbasisvorgeschlagen, die 2 - 6 Gew.-% eines hydraulischen Zements oder eines Wasserzementes beinhalten. Der Zement wird hier als Regulator der Compoundrheologie (Viskositätsverminderer) und als Verbesserer der Temperaturbeständigkeit sowie als Spender feuerhemmender Eigenschaften eingesetzt. Zementmengen über 6% beschleunigen die Aushärtung der Zusammensetzung und verringern dadurch die Topfzeit. In der Patentschrift wird daher u.a. vorgeschlagen, durch Zusatz von Zitronensäure oder einem anderen Verzögerungsmittel die Polykondensation zu verlangsamen.

Derartige Lösungen sind jedoch, bezogen auf die B-Zustandsstabilität, nicht wirksam genug. Die Verwendung des Zements in solchen Systemen führt zwar zur Erhöhung der Wärmeformstabilität und zu einer positiven Beeinflussung der Feuerbeständigkeit der Formstoffe, aber ein flaches langgezogenes Plateau des B-Zustandes wird so nicht erreicht. Eine höhere Zementkonzentration beschleunigt vielmehr sogar die Eindickung und setzt die Lagerzeit herab.

Die DE-A-25 50 779 wiederum beschreibt Kunstharz- und Kondensat-Kunstharz-Produkte auf der Basis von Phenol-Formaldehyd, Phenol-Aminoplast-Fomaldehyd, Aminoplast-Formaldehyd,Resorcin-Formaldehyd oder Resorcin-Formaldehyd-Harnstoff und deren Kondensaten, die mit 1 - 20 Gew.-Teilen eines Zementes pro Gewichtsteil des in den oben erwähnten Produkten vorhandenen oder zu deren Herstellung verwendeten Wassers hergestellt werden. Der Zement soll hiebei in stöchiometrischen Mengen verwendet werden, sodaß sämtliches, ursprünglich in dem System vorhandenes Wasser plus Reaktionswasser durch Aushärten des Zements abgebunden wird und der Zement somit die Formmasse eindickt. Als Regulator der Rheologie bzw. Flußeinsteller der einschlägigen Preformstoffe soll hier ein keramischer Ton verwendet werden.

Preformstoffe gemäß dieser Offenlegungsschrift weisen zwar verbesserte Formfließeigenschaften und günstig beeinflußte Massetransportvorgänge auf, aber ihre Plateauviskosität ist ziemlich steil. Die dehydratisierende Zementwirkung katalysiert die Kondensationsreaktionen der vorhandenen Resole und der B-Zustand vertieft sich. Solche Vorstufen werden direkt (ohne Reifung) verarbeitet. Ihre Lagerzeit ist verhältnismäßig kurz - nur etwa 3 Wochen. Das Stabilisieren bzw. das ausreichende Hemmen des Molekularwachstums der Matrixbindemittel wird auf diese Weise nicht erreicht und die Preßmassen dicken relativ zügig weiter ein. Solche Preßmassen ändern schnell ihre anwendungstechnischen Parameter und bedürfen rascher Verarbeitung. Vorteile des Zements als Zusatzstoff und Reaktionsmittel finden hier nicht die mögliche volle Nutzung.

Es wurde auch schon vorgeschlagen (CH-A-624691), Preformstoffe aus Phenolharzsystemen in photopolymerisierbarer Ausführung herzustellen. Solche Produkte führen zwar zu Formmassen mit etwas längerer B-Zustandscharakteristik, sie haben jedoch den Nachteil, daß sie nur für ungefüllte, sehr dünne, flächige Formstoffe geeignet sind und eine Aufbewahrung im Dunkeln benötigen.

Ähnliche Nachteile besitzen Verbundstoffe, die mit Phenolresolen in Kombination mit durch Lichteinwirkung freisetzbaren organischen Säuren als B-Zustandseinsteller und Härtungskatalysator arbeiten (DE-A-3 317 570).

Auch Preformstoffe mit strahlungshärtbaren Bindemitteln wurden bereits entwickelt (EP-A-168 065). Sie gestatten zwar die Herstellt von Compositvorstufen mit Langzeitlagerfähigkeit, aber sie lösen nicht die Problematik der Erreiche von Vorstufen mit einstellbarer B-zustandsspezifischer Rheologie und benötigen dunkle und gegen Strahlung abgeschirmte Aufbewahrung. Darüberhinaus weisen sie auch den Nachteil auf, daß sie lediglich die Herstellung von flächigen, bis zu 10 mm dicken Gebilden erlauben.

Schließlich ist es auch bekannt, Kompositionen von Phenolharzen für die Erzeugung von vorimprägnierten Harzmatten aus Phenolformaldehydresolen mit Härter und entsprechenden Zusatzstoffen unter Beimengung eines Additives herzustellen, das mindesten 20 Gew.-%, bezogen auf das Gesamtgewicht des Additives, eines Alkali- oder Erdalkalimetaborats, gegebenenfalls in Kombination mit Erdalkalioxiden, beinhaltet und in der Menge von maximal 60 Gew.-%, bezogen auf die verwendete Phenolharzlösung, zugegeben wird (EP-A-176 378, EP-A-220 105).

Letztlich sind auch einschlägige Kompositionen von Phenolharzen mit einem Additiv, das Triethanolaminborat oder eine Mischung von einem Amin und einem Boroxid beinhaltet, bekannt (EP-A-249 517).

Aus Vorstufen der oben erwähnten Art hergestellte Formstoffe besitzen den Verbundwerkstoffen auf Basis ungesättigter Polyesterharze ähnliche Festigkeiten und zeichnen sich durch günstiges Brandverhalten und hohe Wärmeformstabilität aus. Die Vorstufen weisen aber ebenfalls ein verhältnismäßig steiles B-Zustandsplateau auf. Ihre Lagerfähigkeit beträgt etwa 2 Monate bei Raumtemperatur, wobei sie jedoch stets trockener und härter werden. Auch bei diesen verhältnismäßig weit entwickelten Preformstoffen ist die einleitend beschriebene Langzeit-B-Zustandscharakteristik nur ungenügend erreichbar. Darüberhinaus kann beim Verarbeiten dieser Materialien der Härtungskatalysator zur Korrosion der einschlägigen Werkzeuge führen.

Aufgabe der vorliegenden Erfindung ist es daher, Phenolharzpreformstoffe zu schaffen, die ein definiertes und rasch erreichbares B-Zustandsplateau mit flachem Verlauf aufweisen, gute Aushärtungscharakteristik besitzen und die oben genannten Nachteile überwinden.

Die lösung dieser Aufgabe erfolgt durch Phenolharzpreformstoffe bzw. mit einem Verfahren mit den in den Patentansprüchen angegebenen Merkmalen.

Es wurde gefunden, daß Preformstoffe auf Basis von Phenolharzen, gegebenenfalls mit Reaktionsmitteln, Zusatz- und Hilfsstoffen, in Kombination mit hydraulischen Bindemitteln und/oder deren Bestandteilen sowie mit einem Reduktor der Alkalität bestehend aus Säuren und/oder sauren Salzen schnell zu einem gewünschten B-Zustand eindicken können, das erreichte Plateau zu halten im Stand sind und somit die Herstellung heißhärtbarer Verbundvorstufen mit geeigneter Rheologie und Reaktivität ermöglichen.

Phenolharze, die nach der erfindungsgemäßen Lehre für die Herstellung solcher Preformstoffe verwendet werden, sind flüssige, bevorzugt neutral oder schwach alkalisch eingestellte Produkte der meist alkalisch katalysierten Kondensation von Aldehyden mit Phenol, Kresol, Resorcin, Xylenol und dergleichen, die eine Modifizierung, z.B. durch Furanharze oder andere höhermolekulare Systeme, aufweisen können. Besonders geeignet sind Phenolformaldehydkondensate mit einem Molverhältnis Phenol zu Formaldehyd von mindestens 1:1, vorzugsweise 1:1,2 - 2,0. Diese Kondensationsharze erfüllen in den Preformstoffen die Aufgabe eines eindickbaren Bindemittels, das in den fertigen Formstoffen überwiegend zur gestaltgebenden Hauptkomponente wird.

Als hydraulisches Bindemittel werden hier Wasserzemente, Zementerzeugnisse, hochtonerdehaltige hydraulische Bindemittel und alle Kalzium- sowie Magnesiumoxid beinhaltenden aushärtenden Materialien in einer Menge von weniger als 20 Gew.-Teilen pro 1 Gew. -Teil Harz verwendet. Vorteilhafterweise werden 15 - 150 Gew. -Teile eines hydraulischen Bindemittels oder 1 - 15 Gew.-Teile seiner Erdalkalioxide einzeln oder ungemischt, pro 100 Gew.-Teile Harzkomponente eingesetzt. Die verwendete Menge an hydraulischen Bindemitteln und/oder deren Bestandteilen entspricht dem Verhältniswert von

$$\frac{\text{Zahl der Alkalitätsäquivalente des hydraulischen Bindemittels und/oder deren Bestandteile im System}}{\text{Zahl der Mole der phenolischen OH–Gruppen im System}} > 0,01$$

Vorzugsweise kommen die hydraulischen Bindemittel und/oder deren Bestandteile in pastöser Form, z.B. als Einstellpaste, zum Einsatz, wobei die Einstellpaste als Träger ein niederviskoses Polyesterharz der Säurezahl 0, ein niederviskoses Epoxidharz und/oder Trikresylphosphat beinhaltet.

Die gegenständlichen Wasserzemente sind feingemahlene hydraulische Bindemittel für Mörtel und Beton, bestehend im wesentlichen aus Siliziumoxid, Aluminiumoxid, Aluminiumhydroxid, Kalziumoxid, Magnesiumoxid und Eisenoxid, insbesondere in Kalziumsilikat-, Kalziumaluminat- und Kalziumferritform, die mit Wasser vermischt erhärten (Hydratation). Die Hydratation ist vorallem durch Hydrolyse des Trikalziumsilikates begleitet, die besonders zur Kalziumhydroxid-, Silikagel- und Dikalziumsilikatbildung führt. In den gegenständlichen Preformstoffen fungiert der Zement als Eindicker, Füllstoffmaterial, Wasserabsorber, Katalysator, mikroverstärkendes Material, Formaldehydumwandler, Dehydratationsmittel, Flammhemmer, Pigment und Reduzierer der flüchtigen Anteile.

Die oben erwähnten hochtonerdehaltigen hydraulischen Bindemittel sind Tonerdezemente, die durch besondere Kalziumaluminatreichhaltigkeit gekennzeichnet sind. Ihr Gehalt an Tonerde liegt in der Regel zwischen 50 und 80 Gew.-%. Als Bespiel können Secar® 50, Secar® 71, Secar® 80, der Firma Lafarge Fondu International, Frankreich, genannt werden.

Als gemischte Bestandteile der hydraulischen Bindemittel sind z.B. Gemische aus Kalziumoxid und/oder Magnesiumoxid mit hydraulischen Zusatzstoffen oder Gemischen aus Zement mit hydraulischen Zusatzstoffen zu verstehen. Hydraulische Zusatzstoffe besitzen alleine ohne Kalziumoxid und/oder Magnesi-

4

umoxid keine Bindefähigkeit, jedoch enthalten sie Bestandteile, die bei gewöhnlicher Temperatur mit z.B. Kalk in Gegenwart von Wasser erhärten. Hydraulische Zusatzstoffe sind überwiegend kieselsäure- und tonerdehaltige, fein gemahlene Produkte aus vulkanischem Tuffstein. Als Beispiel kann TRASS der Firma Rhein-Trass GmbH/BRD angeführt werden.Als einzelne Bestandteile der hydraulischen Bindemittel sind z.B. Magnesium- oder Kalziumoxid zu nennen.

Bei den Carbonsäuren, Carbonsäuresalzen, den anorganischen Säuren und den sauren Salzen anorganischer Säuren handelt es sich um Verbindungen, die eine hohe Alkalität des Systems abstumpfen, eine gegebenenfalls überschüssige Menge von mehrwertigen Metallionen des relevanten Systems abbinden und die schnelle Vergrößerung der Molekularmasse des einschlägigen Bindemittels hemmen können. So ist es z.B. möglich, Salicylsäure, Mononatriumphosphat, Oxalsäure und dergleichen, gegebenenfalls in pastöser Form, zu verwenden. Die vorstehend erwähnten Substanzklassen werden aus Gründen der Zweckmäßigkeit im folgenden als Reduktor bezeichnet werden. Die eingesetzte Reduktormenge entspricht zweckmäßig einem Verhältniswert von

$$\frac{=\text{Zahl der Aziditätsäquivalente des Reduktors im System}}{\text{Zahl der Wassermole im System}} < 2$$

Vorteilhafterweise liegt sie zwischen 0,2 und 0,05.

Die Funktion des Reduktors in der Prematrix der erfindungsgemäßen Preformstoffe beruht insbesondere auf der Beeinflussung des Anstiegeverlaufes der Molekularmasse des einschlägigen Kondensationharzes durch kontrollierte Salz- und Adduktbildung, insbesondere über Änderungen der Art und Konzentration des Systemelektrolyten sowie durch geminderte basische Katalyse. Eine bedeutende Rolle wird dabei der pH-Einstellung beigemessen.

Überraschenderweise hat sich nun gezeigt, daß durch ein solches Mittel offensichtlich auch das weitere Eindicken des Kondensationsharzes infolge der durch das Dehydratationsmittel, insbesondere Zement, den Kondensationspromotor, üblicherweise begünstigte Kondensation gehemmt wird.

Darüberhinaus konnte überraschend festgestellt werden, daß das erfindungsgemäße Prematrixsystem trotz gehemmter Reaktivität bei der Lagerung eine schnelle Aushärtung beim Heißpressen aufweist. So resultieren Prematrixsysteme bzw. Preformstoffe mit langzeitiger B-Zustandscharakteristik und gutem Aushärtevermögen.

Für das B-Zustand-spezifische Eindicken der relevanten Prematrixsysteme werden insbesondere die folgenden Faktoren als wichtig angesehen:

- Vergrößerung der Molekularmasse des Reaktionsharzes durch Salzbildung und Adduktbildung (Komplex- und Chelatbildung) sowie durch fortschreitende Kondensation
- Ionenaustauscheranaloge Sorptionseffekte mit Entstehung von höhermolekularen Gebilden
- physikalisches Dickwerden durch Verdünnung des Reaktionsharzes mit Feststoffen und partielles Abbinden der hydraulischen Bindemittel.

Das Eindicken verläuft analog zur Prematrixviskosität und stellt eine strukturparameterbezogene Eigenschaft zur Charakterisierung der Prematrixrheologie dar. Diese Eigenschaft wird rechnerisch erfaßt aus dem Ausbreitmaß einer erfindungsgemäßen Probe, der ein Verdrängungsvorgang unter definiertem Druck und während einer bestimmten Zeit aufgezwungen wird. Sie gibt an, um wieviel Prozent die untersuchte Prematrixprobe langsamer fließt als eine P robe mit der Ausbreitgeschwindigkeit von 100 mm/min.

Als Zusatzstoffe können z.B. Füllstoffe, Flexibilisatoren, Farbmittel, Stabilisatoren, Hydrophobiermittel, Low Profile-Additive und weitere, zwecks Modifizierung der Systemeigenschaften zusetzbare Stoffe verwendet werden.

Als Hilfsstoffe können beispielsweise Gleitmittel, Trennmittel, Netzmittel, Entlüfter sowie andere Systemkomponenten zugesetzt werden, die die Verarbeitung der fertigen Verbundwerkstoffe und ihrer Vorstufen ermöglichen oder verbessern.

Die praktische Herstellung der erfindungsgemäßen Preformstoffe aus den Ausgangskomponenten erfolgt durch ihre gründliche Abmischung derart, daß vorteilhafterweise zunächst dem Phenolresolharz die Zusatzstoffe sowie Hilfsmittel und erst dann die Reaktionsmittel beigemengt werden, worauf die Vereinigung mit dem Verstärkungsmaterial folgt. Im erfindungsgemäßen Verfahren wird ein Gew.-Teil Phenolharz mit weniger als 4 Gew.-Teilen eines hydraulischen Bindemittels und/oder dessen Bestandteilen sowie weniger als 0,2 Gewichtsteiläquivalenten eines Reduktors der Alkalität bestehend aus Säuren und/oder sauren Salzen, mit Ausnahme von Zitronensäure, vermischt.

Die Zugabe der hydraulischen Bindemittel und/oder deren Bestandteile und des Reduktors kann dabei in Form von geteilten Zuwaagen oder auch als Zugabe eines einzigen Gemisches aus diesen zwei Hauptkomponenten erfolgen. Dieses Gemisch kann eine pulverige oder vorteilhafterweise pastöse Beschaffenheit aufweisen (Einstellpulver bzw. Aktivifüllstoffpasten oder Einstellpaste etc.)

Die Vereinigung der Prematrix mit dem Verstärkungsmaterial kann auf üblicher Weise geschehen, beispielsweise auf einer SMC-Anlage, durch intensive mechanische Durchknetung einer bahnförmigen Deposition von geschnittenen Glasfasern zwischen zwei Prematrix-Filmen zwischen zwei Kunststoffolien (Herstellung von P-SMC).

Eine andere Art der Preformstoffherstellung beruht z.B. auf der Beimengung geschnittener Glasfasern zur Prematrix unter kontinuierlicher Rühreinwirkung so lange, bis die Fasern völlig gleichmäßig verteilt sind (BMC-Herstellung).

Besondere Verfahren oder spezielle Materialien bzw. Maßnahmen sind bei der Schaffung des Prematrix-Verstärkungsmaterialverbundes nicht notwendig.

Die Erreichung des preformstoffspezifischen B-Zustandes dieser Vorprodukte erfolgt durch Reifung, bevorzugt bei Zimmer- bzw. erhöhter Temperatur.

Die Aufbewahrung dieser Produkte kann bei Zimmertemperatur erfolgen oder vorzugsweise bei einer Temperatur unter +15°C. Die Verpreßbarkeit beträgt dann mehr als 3 Monate und im zweiten Falle bis zu einem Jahr.

Die Verarbeitung dieser Preformstoffe kann in konventioneller Weise erfolgen, beispielsweise durch Heißpressen und Drucksack-Verfahren. Die Technologie selbst kann auf übliche Weise realisiert werden. Sie kann z.B. unter den der UP-SMC-Verarbeitung ähnlichen Bedingungen geschehen. Die Fertigteile, insbesondere der Faserverbundausführung, sind hochfeste unschmelzbare Produkte mit hoher Temperaturbeständigkeit und günstigem Brandverhalten. Derartige Formstoffe können vor allem in Gebieten mit hohen Ansprüchen auf Brandsicherheit und hohe Wärmstabilität eingesetzt werden, beispielsweise im Automobilbau als Hitze-, Korrosions- und Lärmschutz im Auspuffbereich, im öffentlichen Transportwesen als Sitzelemente sowie Interieurauskleidungselemente, im Bauwesen als Exterieur- und Interieurpaneele und dergleichen.

Die erfindungsgemäße Lehre wird an Hand der folgenden Beispiele erläutert:

BEISPIEL I:

Herstellung eines Kondensationsharzes:

112,28 Gew.-Teile Phenol und 58,2 Gew.-Teile Formaldehyd , eingefüllt in einen Reaktor, werden auf 58°C erhitzt und

innerhalb von 2 Stunden mit 0,39 Gew. -Teilen NaOH unter Konstanthaltung der Temperatur auf 58°C vermischt. Hierauf wird die Temperatur auf 80°C gesteigert und bis zur Erreichung der gewünschten Viskosität aufrechterhalten. Anschließend wird das Reaktionsgemisch auf 40°C abgekühlt und durch Säurezugabe auf einen pH-Wert von 7,1 bis 7,2 eingestellt. Das erhaltene Reaktionsharz ist ein gut flüssiges Phenolharz mit einer B-Zeit von etwa 90 Sekunden.

Herstellung einer Prematrix:

100 Gew.-Teile des Kondensationsharzes werden bei Raumtemperatur in einem Mischgefäß mit 4 Gew.-Teilen Wasser, 96 Gew.-Teilen Kalziumcarbonat und 2 Gew. -Teilen Zinkstearat gründlich vermengt. Anschließend werden unter ständigem Rühren und unter Aufrechterhaltung der ursprünglichen Temperatur diesem Gemisch 24 Gew.-Teile eines Weißzements und dann 4,8 Gew.-Teile Salizylsäure beigemischt. Das erhaltene Compound kann beispielsweise sowohl für die Herstellung von BMC-Bulk molding compounds als auch für die Erzeugung von SMC-Sheet molding compounds verwendet werden.

BEISPIEL II:

Herstellung einer Prematrix aus Kondensationsharz, Zusatzstoffen sowie Hilfsstoffen und einem Einstellpulver bzw. einer Einstellpaste auf Basis hydraulischer Bindemittel:

In einem Misschgefäß werden bei Raumtemperatur 100 Gew.-Teile des Phenolresolharzes aus Beispiel 1 mit 96 Gew.-Teilen $CaCO_3$ und 1,8 Gew.-Teilen Zinkstearat gründlich zusammengemischt. Anschließend werden diesem Gemisch unter intensivem Röhren und unter Aufrechterhaltung der Raumtemperatur 28,8 Gew.-Teile eines Einstellpulvers, bestehend aus einer Mischung von 24 Gew.-Teilen Zement und 4,8 Gew.-Teilen Salizylsäure, zugefügt und das System wird gründlich homogenisiert.

Als Füllstoff kann aber such Aluminiumhydroxid eingesetzt werden.

Statt des Einstellpulvers kann selbstverständlich analog auch eine Einstellpaste, bestehend aus relevanten Mengen Zement und Salizylsäure, eingeteigt mit beispielsweise niederviskosem Polyesterharz, verwendet werden. Die gewonnene Prematrix und ihre Folgepreßstoffe weisen eine verbesserte Beschaffenheit und im gegebenen Falle, zufolge des verwendeten Trägers, modifizierte Eigenschaften auf.

BEISPIEL III

Herstellung einer Prematrix aus Kondensationsharz,konventionellem Zusatzstoff, Magnesiumoxid (Bestandteil eines hydraulischen Bindemittels) und einem Reduktor:

100 Gew.-Teile eines Kondensationsharzes,wie in Beispiel 1 hergestellt, werden bei Raumtemperatur in einem Homogenisator mit 3 Gew.-Teilen Wasser, 60 Gew.-Teilen Kalziumkarbonat,67,5 Gew.-Teilen Al(OH)$_3$ und 2,0 Gew.-Teilen Zinkstearat gründlich vermischt.Anschließend werden unter Aufrechterhaltung der ursprünglichen Temperatur dieser Mischung 3,9 Gew.-Teile Magnesiumoxid (in einer pastösen Form mit einem Träger aus niedermolekularem speziellem Polyester) und 2,5 Gew.-Teile Calciumbisdihydrogenphosphat beigemischt.

Das erhaltene Gemisch kann schnell eindicken und stellt im B-Zustand eine Prematrix mit Langzeit-Lagervermögen dar.

BEISPIEL IV:

Herstellung eines Preformstoffes in amorpher Form (BMC):

Der Prematrix aus Beispiel I in einer Menge von 100 Gew.-Teilen werden bei Raumtemperatur kontinuierlich und unter gründlicher Durchmengung 18 Gew.-Teile geschnittene Glasfasern Vetrotex® P-276 (Fa. Gewetex, Herzogenrath, BRD) der Länge 0,3 - 5,0 cm zugeführt. Die Fasern weisen 14 μm Nennfilamentdurchmesser auf und sind mit einem Aminosilanfinish versehen.

Die gewonnene Formmasse stellt einen amorphen Preformstoff mit gutem Formfließverhalten dar.

BEISPIEL V:

Herstellung bahnförmiger Mattenpreformstoffe mit unorientiert liegenden Fasern (SMC-R).

Bei diesem Ausführungbeispiel wird die Prematrix (PMX) aus dem Beispiel II mit einem Verstärkungsmaterial auf einer herkömmlichen SMC-Maschine verarbeitet. Das Verstärkungsmaterial besteht aus geschnittenem Vetrotex®-Textilglasroving P 276. Die Faserlänge beträgt etwa 2,5 cm.Die Viskosität der Prematrix liegt bei 55.000 mPa.s. Die Bildung der P-SMC-Bahn erfolgt zwischen zwei Polyethylenfolien.

Die Anlage wird so eingestellt, daß die Geschwindigkeit 2,3 m/min, der Glasauftrag 900 g/m$^2$ und der Rakelspalt 0,909 mm betragen. Die resultierende P-SMC-Bahn weist einen regelmäßigen Aufbau, eine gute Durchtränkung des Verstärkungsmaterials und die folgende Zusammensetzung auf:

Glasgehalt = 32 %, Harzgehalt = 29 %,

Füllstoffgehalt = 39,0 %

Die Bildung des B-Zustandes bei Raumtemperatur erfolgte zirka 4 Tage lang. Das eingedickte Material besitzt folgende, mit dem Plastometer (SMC-Technologie Derek & Küper OHG, Aachen) ermittelte Daten:

| | |
|---|---|
| Homogenitätskoeffizient | HK 59 |
| Plastizitätskoeffizient | PE 9 |
| Charakteristische Geschwindigkeit | VC 24μm/sek |

Die Handhabbarkeit und das rheologische Verhalten entsprechen etwa der Situation bei konventionellen SMC-Produkten auf Basis ungesättigter Polyesterharze (UP).

Die Lagerfähigkeit bei einer Temperatur unter +15°C beträgt zirka 1 Jahr,und die Verarbeitungstechnologie kann auf ähnliche Weise wie bei den UP-SMC-Materialien gestaltet werden. Üblicherweise gelten etwa folgende Prozeßparameter:

$T_{Werkzeug}$ = 145°C, $P_{Masse}$ = 60 bar,

$\tau_{Härtung}$ = 1 min/mm.

Die Werkzeuggeometrie, Zuschnittgröße des Preßpaketes und Strukturviskosität des Materials muß ebenfalls wie bei UP-SMC berücksichtigt werden. Das formgepreßte P-SMC-Material (-Fertigteil) besitzt etwa die folgenden Eigenschaften:

| | |
|---|---|
| Biegefestigkeit | 190 N/mm² |
| Zugfestigkeit | 60 N/mm² |
| Biege-E-Modul | 14.500 N/mm² |
| Minderung der Zugfestigkeit bei RT→140°C | 10 % |
| Barcolhärte | 69 |
| Brandklasse | B1 (M1) |

**Patentansprüche**

1. Compounds aus einer Prematrix eines Phenolharzes und aus einem Verstärkungsmaterial, gegebenenfalls mit Härter, Katalysator, Zusatz- und Hilfsstoffen, dadurch gekennzeichnet, daß die Prematrix hydraulische Bindemittel und/oder deren Bestandteile sowie einen Reduktor der Alkalität bestehend aus Säuren und/oder sauren Salzen enthält, wobei Zitronensäure ausgeschlossen ist.

2. Compounds nach Anspruch 1, dadurch gekennzeichnet, daß die Reduktormenge einem Verhältniswert von

$$\frac{\text{Zahl der Azidit\"ats\"aquivalente des Reduktors im System}}{\text{Zahl der Wassermole im System}} < 2$$

entspricht und die verwendete Menge an hydraulischen Bindemitteln und/oder deren Bestandteilen dem Verhältniswert von

$$\frac{\text{Zahl der Alkalit\"ats\"aquivalente der hydraulischen Bindemittel und/oder von deren Bestandteilen im System}}{\text{Zahl der Mole der phenolischen OH-Gruppen im System}} > 0{,}01$$

entspricht.

3. Compounds nach Anspruch 1 oder 2, dadurch gekennzeichnet, daß das hydraulische Bindemittel ein hydraulischer Zement ist.

4. Compounds nach Anspruch 1 oder 2, dadurch gekennzeichnet, daß das hydraulische Bindemittel ein hydraulischer Zement und/oder hochtonerdehaltiges Bindemittel ist.

5. Compounds nach Anspruch 1 oder 2, dadurch gekennzeichnet, daß die Bestandteile des hydraulischen Bindemittels Kalziumoxid, Magnesiumoxid und Aluminium- sowie Kieselsäurederivate, gegebenenfalls in pastöser Form, sind.

6. Compounds nach einem der Ansprüche 1 bis 5, dadurch gekennzeichnet, daß der Reduktor in pastöser Form vorliegt.

7. Compounds nach Anspruch 6, dadurch gekennzeichnet, daß es sich bei dem Reduktor um Oxalsäure, Salizylsäure, Mononatriumphosphat und/oder Kalzium-bis-(dihydrogenphosphat) handelt.

8. Verfahren zur Herstellung von Compounds aus einer Prematrix eines Phenolharzes und einem Verstärkungsmaterial, gegebenenfalls mit Härter, Katalysator, Zusatz- und Hilfsstoffen, dadurch gekennzeichnet, daß ein Gew.-Teil Phenolharz mit weniger als 4 Gew.-Teilen eines hydraulischen Bindemittels

8

und/oder dessen Bestandteilen sowie weniger als 0,2 Gewichtsteiläquivalenten eines Reduktors der Alkalität, bestehend aus Säuren und/oder sauren Salzen, mit Ausnahme von Zitronensäure, vermischt wird.

9. Verfahren nach Anspruch 8, dadurch gekennzeichnet, daß die hydraulischen Bindemittel und/oder deren Bestandteile getrennt vom Reduktor zugegeben werden.

10. Verfahren nach Anspruch 8, dadurch gekennzeichnet, daß die hydraulischen Bindemittel und/oder deren Bestandteile als Pulver, vorzugsweise gemischt (Einstellpulver), eingesetzt werden.

11. Verfahren nach Anspruch 8, dadurch gekennzeichnet, daß die verwendeten hydraulischen Bindemittel und/oder deren Bestandteile in pastöser Form (Einstellpaste) zum Einsatz kommen.

12. Verfahren nach Anspruch 11, dadurch gekennzeichnet, daß die Einstellpaste als Träger ein niederviskoses Polyesterharz der Säurezahl 0, ein niederviskoses Epoxidharz und/oder Trikresylphosphat beinhaltet.

13. Verfahren nach Anspruch 8, dadurch gekennzeichnet, daß die hydraulischen Bindemittel und/oder deren Bestandteile gemeinsam mit dem Reduktor in Form pulveriger oder pastöser Gemische (Komplettierpulver oder Komplettierpaste) verwendet werden.

**Claims**

1. Compounds comprising a prematrix consisting of a phenol resin and a reinforcing material, optionally with hardener, catalyst, additives and adjuvants, characterized in that the said prematrix comprises hydraulic binders and/or their components as well as an alkalinity-reducing agent consisting of acids and/or acid salts, wherein citric acid is excluded.

2. Compounds according to claim 1, characterized in that the amount of the said reducing agent equals the ratio of

$$\frac{\text{number of the acidity equivalents of the said reducing agent in the system}}{\text{number of the moles of water in the system}} < 2$$

and that the amount of hydraulic binders and/or their components used equals the ratio of

$$\frac{\text{number of the alkalinity equivalents of the hydraulic binders and/or their components in the system}}{\text{number of moles of phenolic OH groups in the system}} > 0,01.$$

3. Compounds according to claim 1 or 2, characterized in that the hydraulic binder is a hydraulic cement.

4. Compounds according to claim 1 or 2, characterized in that the hydraulic binder is a hydraulic cement and/or a high alumina-containing binder.

5. Compounds according to claim 1 or 2, characterized in that the components of the hydraulic binder are calcium oxide, magnesium oxide and aluminium and silicic acid derivatives, optionally in paste form.

6. Compounds according to any of claims 1 to 5, characterized in that the said reducing agent is in paste form.

9

**7.** Compounds according to claim 6, characterized in that the said reducing agent is oxalic acid, salicylic acid, mono sodium phosphate and/or calcium bis(dihydrogen phosphate).

**8.** A process for the preparation of compounds comprising a prematrix consisting of a phenol resin and a reinforcing material, optionally with hardener, catalyst, additives and adjuvants, characterized in mixing one part by wt. phenol resin with less than 4 parts by wt. of a hydraulic binder and/or its components as well as less than 0,2 parts by wt. equivalent of an alkalinity-reducing agent, consisting of acids and/or acid salts, wherein citric acid is excluded.

**9.** A process according to claim 8, characterized in that the hydraulic binders and/or their components are introduced separately from the said reducing agent.

**10.** A process according to claim 8, characterized in that the hydraulic binders and/or their components are introduced as powder, preferable in mixed form (reference powder).

**11.** A process according to claim 8, characterized in that the hydraulic binders and/or their components used are introduced in paste form (reference paste).

**12.** A process according to claim 11, characterized in that the reference paste contains, as carrier, a low-viscosity polyester resin having an acid number of 0, a low-viscosity epoxy resin and/or tricresyl phosphate.

**13.** A process according to claim 8, characterized in that the hydraulic binders and/or their components are used together with the said reducing agent in powder or paste mixture form (complement powder or complement paste).

**Revendications**

**1.** Compositions d'une prématrice d'une résine phénolique et d'un agent de renforcement, facultativement avec un durcisseur, un catalyseur, des matières adjuvantes et auxiliaires, caractérisées en ce que la prématrice contient des liants hydrauliques et/ou leurs composants, ainsi qu'un réducteur d'alcalinité consistant en des acides et/ou des sels d'acides, où l'acide citrique est exclu.

**2.** Compositions suivant la revendication 1, caractérisées en ce que la quantité de réducteur correspond à une valeur du rapport :

$$\frac{\text{teneur en équivalents acides du réducteur dans le système}}{\text{teneur en moles d'eau dans le système}} < 2$$

et en ce que la quantité utilisée de liants hydrauliques et/ou leurs composants correspond à une valeur du rapport :

$$\frac{\text{teneur des équivalents alcalins des liants hydrauliques et/ou de leurs composants dans le système}}{\text{teneur en moles de radicaux -OH phénoliques dans le système}} > 0,01$$

**3.** Compositions suivant la revendication 1 ou 2, caractérisées en ce que les liants hydrauliques sont un ciment hydraulique.

**4.** Compositions suivant la revendication 1 ou 2, caractérisées en ce que les liants hydrauliques sont un ciment hydraulique et/ou un liant à teneur élevée en alumine.

**5.** Compositions suivant la revendication 1 ou 2, caractérisées en ce que les composants des liants hydrauliques sont de l'oxyde de calcium, de l'oxyde de magnésium et des dérivés de l'aluminium ainsi que de l'acide silicique, facultativement sous forme pâteuse.

**6.** Compositions suivant l'une quelconque des revendications 1 à 5, caractérisées en ce que le réducteur se présente sous forme pâteuse.

**7.** Compositions suivant la revendication 6, caractérisées en ce que le réducteur consiste en l'acide oxalique, l'acide salicylique, le monophosphate de sodium et/ou le bis(dihydrogénophosphate) de calcium.

**8.** Procédé de préparation de compositions d'une prématrice d'une résine phénolique et d'un agent de renforcement, facultativement avec un durcisseur, un catalyseur, des matières adjuvantes et auxiliaires, caractérisé en ce que 1 partie en poids de résine phénolique est mélangée à moins de 4 parties en poids d'un liant hydraulique et/ou de ses composants ainsi que moins de 0,2 équivalent de partie en poids d'un réducteur d'alcalinité consistant en des acides et/ou des sels d'acides, à l'exception de l'acide citrique.

**9.** Procédé suivant la revendication 8, caractérisé en ce que les liants hydrauliques et/ou leurs composants, séparés du réducteur, sont ajoutés.

**10.** Procédé suivant la revendication 8, caractérisé en ce que les liants hydrauliques et/ou leurs composants sont ajoutés sous forme poudreuse, de préférence prémélangées (poudre d'appoint).

**11.** Procédé suivant la revendication 8, caractérisé en ce que les liants hydrauliques et/ou leurs composants utilisés sont ajoutés sous forme de pâte (pâte d'appoint).

**12.** Procédé suivant la revendication 11, caractérisé en ce que la pâte couvre, comme support, une résine de polyester peu visqueuse de teneur en acide 0, une résine époxyde peu visqueuse et/ou un tricrésylphosphate.

**13.** Procédé suivant la revendication 8, caractérisé en ce que les liants hydrauliques et/ou leurs composants ainsi que le réducteur, sont utilisés sous forme poudreuse ou de mélange pâteux (complètement poudreux ou complètement pâteux).